# EUROPEAN PATENT SPECIFICATION

(11) **EP 1 651 057 B1**
(45) Date of publication and mention of the grant of the patent: **24.10.2007**
(21) Application number: 04740886.9
(22) Date of filing: 09.07.2004
(51) Int. Cl.: A23C 9/13, A23J 3/16

(54) **FERMENTED FOOD PRODUCT COMPRISING SOY PROTEIN**
FERMENTIERTES, SOJAPROTEINE ENTHALTENDES LEBENSMITTEL
PRODUIT ALIMENTAIRE FERMENTE CONTENANT DES PROTEINES DE SOJA

(30) Priority: 08.08.2003 EP 03077513
(43) Date of publication of application: 03.05.2006
(73) Proprietor: UNILEVER N.V., 3013 AL Rotterdam (NL); UNILEVER PLC, London, Greater London EC4P 4BQ (GB)
(72) Inventor: HAUSER, Astrid, UNILEVER R & D VLAARDINGEN, 3133 AT Vlaardingen (NL); VAN HEETVELDE, Ingeborg Sonja Viktor, 3071JL Rotterdam (NL)
(74) Representative: Joppe, Hermina Laura Petronella
(86) International application number: PCT/EP2004/007610
(87) International publication number: WO 2005/013706

(56) References cited:
- WO-A-03/055324
- US-A- 6 013 771
- DATABASE WPI Section Ch, Week 198425 Derwent Publications Ltd., London, GB; Class D13, AN 1984-155386 XP002260893 & JP 59 082050 A (FUJI OIL CO LTD) 11 May 1984 (1984-05-11)
- DATABASE WPI Section Ch, Week 199408 Derwent Publications Ltd., London, GB; Class D13, AN 1994-063488 XP002260894 & SU 1 789 172 A (LENGD REFRIG IND TECHN INST) 23 January 1993 (1993-01-23)

## Description

### Field of the invention

The present invention relates to a food product fermented with lactic acid bacteria comprising soy protein. The invention further relates to use of such food products as a health food and a process for the preparation of the food products.

### Background to the invention

According to the Codex Alimentarius (FAO/WHO 1977), yogurt is milk fermented with *Lactobacillus bulgaricus* and *Streptococcus thermophilus* and the microorganisms in the final product must be "viable and abundant". Other food products fermented with S. thermophilus, which may not be called yogurt according to the above definition exist. For instance "Bifidus yogurt" is made using selected cultures of *B. bifidum, B. longum, S. thermophilus, and L. delbrueckii,* which results in a yogurt-like product having a milder taste than yogurt.

Also known are so-called "soy yogurts", in which the main source of protein is not milk, but soy protein and which are fermented with yogurt culture. These soy yogurts are herein also described as yogurts. Examples of commercially available soy yogurts are Yofy produced by Van der Moortele and Sojasun produced by Triballat. Though the preparation of these commercial food products is not always known, most of these soy yogurts are prepared from soy beans and have a soy protein content that is relatively low.

US 6013771 describes isoflavone rich soy protein isolates and their application in food products. Column 8, Formulation 4, shows the preparation of a soy yogurt with SPI containing about 8 grams of soy protein per 170 gram serving.

XS 002200893 discloses a lactic acid fermented pudding comprising hydrolysed soy protein.

We have found that a food product prepared with soy protein isolate (SPI) as sole protein source is very thick and gives a non-dairy yogurt characteristic dry mouthfeel.

We have found that the use of hydrolysed SPI in yogurt applications results in improved product stability at low pH, but the products have no yogurt texture. The texture/firmness in these products may be improved by addition of thickeners, such as starch or pectin. However, addition of these thickeners still does not create a dairy-like yogurt texture. Further for fruit yogurt applications additional problem is that the shear required to mix the fruit preparation into the yogurt further breaks down the texture.

### Summary of the invention

It is therefore an object of the invention to provide a food product fermented with one or more lactic acid bacteria comprising soy protein that has a high level of soy protein and a good taste and texture resembling that of yogurt. It is a further object of the invention to provide such food products in which the presence of thickeners or gums is not required. Still a further object is to provide a food product that is a stirred-type food product, preferably spoonable as defined herein, in which flavouring such as fruit can be easily mixed without disrupting the texture of the product.

One or more of these objects are attained according to the invention in that the food product comprises at least 0.2 wt.% hydrolysed protein. According to the invention dairy-like spoonable yogurt texture may be obtained even without the need of thickeners.

### Detailed description of the invention

Lactic-acid Bacteria herein are gram-positive, rod- or sphere-shaped bacteria that produce lactic acid as the principal or sole end product of carbohydrate fermentation.

The amount of soy protein in the food product according to the invention is 4-10 wt.%, preferaby 4-7 wt.%.

The amount of hydrolysed protein in the food product according to the invention is at least 0.2 wt., preferably, at least 0.5 wt.% more preferably at least 1 wt.% and most preferably at least 1.5 wt.%. Amounts of hydrolysed soy protein present are included in the amounts of soy protein.

The presence and amounts of proteins (non-hydrolysed and hydrolysed) present in the food product may be determined by the skilled person using common analysis techniques e.g. mass spectroscopy and liquid chromatography.

The production of the fermented soy according to the invention may include the following steps:
1) Standardizing of soy starting material
2) Thermal treatment and homogenisation
3) Addition of starter culture
4) Fermentation at 40-45°C
5) Cooling to about 10°C and packaging
6) Mixing in fruit other flavouring components

The characteristic flavor of yogurt is largely due to carbonyl compounds, particularly acetaldehyde (25 - 50 mg/kg), volatile fatty acids, and to some extent, due to acetone and acetoin.

The typical pH of soy yogurt varies from 4.0 - 5.0, according to type of yogurt, fat content, and specific starter cultures used.

Low-acidity yogurts have a pH above 4.6, while normal acidity yogurt has a pH of 4.0-5.0.

The soy yogurt according to the invention may be set-style yogurt with a firm gelled texture, or may be stirred-style yogurt, with a spoonable or fluid texture. Fruit yogurts are preferably stirred type.

Preferably the fermentation for the set-style soy yogurt takes place in the package of the yogurt after packaging.

Stirred-type soy yogurt is preferably fermented in fermentation tanks. After fermentation, the product may be stirred at a low speed prior to its transport by pumping and filling. A moderate to low shear rate is critical to achieve the desired viscous properties of stirred-style yogurt.

The food products according to the invention may be frozen like ice cream or it may be dehydrated to give yogurt powder.

Non-hydrolysed soy protein isolate, when used alone in the food products results in very firm and dry textures at soy protein levels above 4 wt.%. Such food products also have a taste that is less preferred, in particular they give a dry mouthfeel.

Further texture improvement can be achieved by addition of some milk protein, e.g. skim milk powder (SMP) buttermilk powder (BMP) and/or whey powder (such as sweet whey powder), which will result in a smoothier texture and better taste,in which case the soy protein isolate ratio still largely determines the texture.

Although firmness of the food products according to the invention is lower for all products after application of shear for instance for mixing in fruit preps, still spoonable textures may be achieved.

Preferably vegetable oil and/or may be added to the food products. The addition of oil leads to an improvement in terms of smoothness and appearance.

Although the addition of thickeners is not needed in food products according to the invention, thickeners may be added, e.g. for further improving syneresis (e.g. pectin, carrageenans, locust bean gum).

The food product is fermented with any lactic acid bacteria or any combinations of lactic acid bacteria. Preferably the food product is fermented with *Streptococcus thermophilus* and *Lactobacillus bulgaricus.* The combination of these lactic acid bacteria gives a characteristic yogurt taste.

The hydrolysed protein is hydrolysed soy protein.

Preferably the food product has a Stevens value of 50 to 300 g, more preferably 50 to 250 g, even more preferably 120 to 200 g. Preferably the food product is spoonable.

Preferably the food product has a viscosity of 10000 to 800000 mPa.s, more preferably 50000 to 200000, most preferably 50000 to 100000 mPa.s.

Preferably the food product comprises 0.1-3 wt.% milk protein.

The presence of oil and/or fat is advantageous in the products according to the invention. Oil and/or fat has a positive effect on mouthfeel, the products become more creamy, smoother and less watery. Additionally, the preferred addition of oil or fat make it easier to control foaming of the protein during preparation of the food product. Therefore preferably, the food product comprises 0,2-10 wt.%, more preferably 0,5-5, even more preferably 0,5-2 wt.% oil or fat.

The invention further relates to a process for the preparation of a fermented food product, wherein a starting material comprising soy protein is fermented with on or more lactic acid bacteria and wherein 40-95wt.% relative to the total amount of soy protein is hydrolysed soy protein.

The starting material comprises a mixture of non-hydrolysed and hydrolyseed protein.

Preferably, the mixture comprises 50-95 wt.% of hydrolysed soy protein relative to the total amount of soy protein.

Preferably the mixture is prepared from hydrolysed soy protein isolate (herein also designated as SPI) and non-hydrolysed soy protein isolate.

### Examples

### Stevens value

Stevens values give an indication about the firmness (spoonability) of a product. The firmness of all products at 5°C (after storage at 5°C for 24 hours) was measured using a Stevens Texture Analyser (1 mm/sec, 25 mm depth, mayonnaise grid (mesh 7, thread thickness 0.8 mm, mesh width 2.8 mm) and is quoted herein as the Stevens value (in g). The accuracy of this measurement in all cases is ± 10 g.

Stevens values of above 120 and well below 300 g are typical for a spoonable product.

### Viscosity

Viscosity of the food products is measured using a Brookfield viscometer, spindle 6, at 5 rotations per minute (herein abbreviated rpm).

### Syneresis

Syneresis was measured by after storing flasks with the food product for 24 hours at 25°C and subsequently 24 hours at 5°C. The weight of the flasks before (wᵢ) and after (w_{d}) decantation of supernatant water and syneresis values were expressed as (wᵢ- w_{d}) / wᵢ.

### Bostwick

The Bostwick equipment consists of a 125 ml reservoir provided with a outlet near the bottom of a horizontally placed rectangular tub and closed with a vertical barrier. The tub's bottom is provided with a 25 cm measuring scale, extending from the outlet of the reservoir. When equipment and sample both have a temperature of 5°C, the reservoir is filled with 125 ml of the sample after it has been shaken by hand ten times up and down. When the closure of the reservoir is removed the sample flows from the reservoir and spreads over the tub bottom. The path length of the flow is measured after 30 seconds. The value, expressed as cm per 30 seconds is the Bostwick ratio.

### Example 1

A fermented food product (yogurt) was prepared as follows. Soy protein isolate Supro Plus^{™} 651 and hydrolysed soy protein isolate FXP H220D, both containing about 80 wt.% soy protein and originating from Protein Technology International, skimmed milk powder and salt in amounts as given in table 1 were mixed with hot demi water at 70°C using a Silverston mixer at a speed of 2500 rpm until a homogeneous mixture is obtained. The mixture was sterilized in an Ultra High Temperature (UHT) apparatus at 170-200 bar, with heating bath temperature 85°C and holding bath temperature 75°C. The sterilized product was filled into 125 ml flasks and 0.2 wt.% yogurt culture YF202 (ex Rhodia) suspended in tripton solution was added to the flasks. The flasks were incubated at 43°C for 12 hours and thereafter cooled to 10°C and stored at 5°C.

Viscosity, hardness and syneresis of the prepared yogurt-type food compositions were measured according to the above described test methods. The results are given in table 2.

### Examples 2 & 3 and comparative experiments A, B and C

The food products in these experiments were prepared as in example 1, however with different amounts of non-hydrolysed and hydrolysed soy protein isolates as indicated in table 1.

The results are given in table 1.

Examples 1-3 and the comparative experiments A, B & C show that when only non-hydrolysed soy protein isolate is used, too thick products are prepared that have a less preferable taste (mouthdry). When only hydrolysed soy protein isolate is used no spoonable yogurt texture may be obtained.

The yogurts of examples 1-3 had a clean, fresh yogurt tase with no or little residual soy taste

Fruit yogurts may be made by adding fruit or fruit puree to the yogurts of examples 1-3.

**Table 1: Composition of milk starting material**

| Composition | Example 1 | Example 2 | Example 3 | Comp. Ex. C | Comp. Ex. A | Comp. Ex. B |
|---|---|---|---|---|---|---|
| | (wt.%) | (wt.%) | (wt.%) | (wt.%) | (wt.%) | (wt.%) |
| Ratio hydrolysed/ non-hydrolysed soy | 70/30 | 60/40 | 40/60 | 20/80 | 100/0 | 0/100 |
| Hydrolysed SPI FXP H0220D | 5.84 | 5.00 | 3.13 | 1.56 | 7.81 | 0.00 |
| Non-hydrolysed SPI Supro 651 | 2.47 | 3.29 | 4.63 | 6.17 | 0.00 | 8.23 |
| Sunflower oil | 1.50 | 1.50 | 1.50 | 1.50 | 1.50 | 1.50 |
| Salt (NaCl) | 0.10 | 0.10 | 0.10 | 0.10 | 0.10 | 0.10 |
| Sweet milk powder | 3.00 | 3.00 | 3.00 | 3.00 | 3.00 | 3.00 |
| Demi water | 87.09 | 87.11 | 87.64 | 87.67 | 87.59 | 87.17 |

**Table 2: Properties of fermented food products, Bostwick values "-" means too low to be measured.**

| Example | Ratio hydrol./non-hydrol.SPl | pH | Viscosity (mPa.s) | Stevens value (g) | Bostwick value | Syneresis after 24 hr | Viscosity after shear (mPa.s) | Stevens value after shear (g) | Bostwick value after shear |
|---|---|---|---|---|---|---|---|---|---|
| A | 100/0 | 4.46 | 70000 | 44 | 9 | 1.62 | 11200 | 12 | 10.5 |
| 1 | 70/30 | 4.51 | 278000 | 184 | 1.9 | 1.25 | 64000 | 52 | 2.5 |
| 2 | 60/40 | 4.49 | 320000 | 244 | 0.75 | 1.13 | 84000 | 62 | 2.2 |
| 3 | 40/60 | 4.45 | 295000 | 361 | -- | 1.08 | 109000 | 105 | 1.8 |
| C | 20/80 | 4.46 | 774000 | 590 | -- | 0.63 | 225000 | 197 | - |
| B | 0/100 | 4.49 | 770000 | 1111 | - | 0.85 | 386000 | 814 | -- |

## Claims

1. Food product fermented with one or more lactic acid bacteria, comprising 4-10 wt.% soy protein, **characterised in that** the food product comprises at least 0.2 wt.% hydrolysed soy protein, and wherein the soy protein comprises a mixture of non-hydrolysed soy protein and hydrolysed soy protein and wherein the soy protein comprises 40-95 wt.% of hydrolysed soy protein.

2. Food product according to claim 1, wherein the soy protein comprises a mixture of non-hydrolysed soy protein and hydrolysed soy protein and wherein the soy protein comprises 50-95 wt.% of hydrolysed soy protein.

3. Food product according to claim 1 or 2, wherein the food product is fermented with *Streptococcus thermophilus* and *Lactobacillus bulgaricus.*

4. Food product according to any of the preceding claims wherein the food product comprises 0.2-10 wt.% oil and/or fat.

5. Food product according to claim 4, comprising 0.5-2 wt.% oil and/or fat.

6. Food product according to any of the preceding claims wherein the food product comprises 0.1-3 wt.% milk protein.

7. Process for the preparation of a fermented food product, according to claim 1 wherein a starting material comprising soy protein is fermented with one or more lactic acid bacteria, **characterised in that** 40-95 wt.% or more relative to the total amount of soy protein is hydrolysed soy protein.

8. Process according to claim 7, **characterised in that** 50-95 wt.% or more relative to the total amount of soy protein is hydrolysed soy protein.

9. Process according to claim 7 or 8, wherein the mixture is prepared from hydrolysed soy protein isolate and non-hydrolysed soy protein isolate.

10. Product obtainable by the process defined in any one of claims 7-9.

## Patentansprüche

1. Nahrungsmittelprodukt, fermentiert mit einer oder mehreren Milchsäurebakterien, umfassend 4-10 Gew.-% Sojaprotein, **dadurch gekennzeichnet, dass** das Nahrungsmittelprodukt mindestens 0,2 Gew.-% hydrolysiertes Sojaprotein umfasst, und worin das Sojaprotein ein Gemisch aus nicht-hydrolysiertem Sojaprotein und hydrolysiertem Sojaprotein umfasst und worin das Sojaprotein 40-95 Gew.-% hydrolysiertes Sojaprotein umfasst.

2. Nahrungsmittelprodukt gemäß Anspruch 1, worin das Sojaprotein ein Gemisch aus nicht-hydrolysiertem Sojaprotein und hydrolysiertem Sojaprotein umfasst und worin das Sojaprotein 50-95 Gew.-% hydrolysiertes Sojaprotein umfasst.

3. Nahrungsmittelprodukt gemäß Anspruch 1 oder 2, worin das Nahrungsmittelprodukt mit *Streptococcus thermophilus* und *Lactobacillus bulgaricus* fermentiert ist.

4. Nahrungsmittelprodukt gemäß einem der vorhergehenden Ansprüche, worin das Nahrungsmittelprodukt 0,2-10 Gew.-% Öl und/oder Fett umfasst.

5. Nahrungsmittelprodukt gemäß Anspruch 4, umfassend 0,5-2 Gew.-% Öl und/oder Fett.

6. Nahrungsmittelprodukt gemäß einem der vorhergehenden Ansprüche, worin das Nahrungsmittelprodukt 0,1-3 Gew.-% Milchprotein umfasst.

7. Verfahren für die Herstellung eines fermentierten Nahrungsmittelprodukts gemäß Anspruch 1, worin ein Ausgangsmaterial umfassend Sojaprotein mit einer oder mehreren Milchsäurebakterien fermentiert wird, **dadurch gekennzeichnet, dass** 40-95 Gew.-% oder mehr bezogen auf die Gesamtmenge an Sojaprotein hydrolysiertes Sojaprotein ist.

8. Verfahren gemäß Anspruch 7, **dadurch gekennzeichnet, dass** 50-95 Gew.-% oder mehr bezogen auf die Gesamtmenge an Sojaprotein hydrolysiertes Sojaprotein ist.

9. Verfahren gemäß Anspruch 7 oder 8, worin das Gemisch hergestellt wird aus hydrolysiertem Sojaprotein-Isolat und nicht-hydrolysiertem Sojaprotein-Isolat.

10. Produkt, erhältlich durch das in einem der Ansprüche 7-9 definierte Verfahren.

## Revendications

1. Produit alimentaire fermenté avec une ou plusieurs bactéries lactiques, comprenant 4 à 10 % en poids de protéine de soja, **caractérisé en ce que** le produit alimentaire comprend au moins 0,2 % en poids de protéine de soja hydrolysée, et dans lequel la protéine de soja comprend un mélange de protéine de soja non hydrolysée et de protéine de soja hydrolysée et dans lequel la protéine de soja comprend 40 à 95 % en poids de protéine de soja hydrolysée.

2. Produit alimentaire selon la revendication 1, dans lequel la protéine de soja comprend un mélange de protéine de soja non hydrolysée et de protéine de soja hydrolysée et dans lequel la protéine de soja comprend 50 à 95 % en poids de protéine de soja hydrolysée.

3. Produit alimentaire selon la revendication 1 ou 2, lequel produit alimentaire est fermenté avec *Streptococcus thermophilus* et *Lactobacillus bulgaricus.*

4. Produit alimentaire selon l'une quelconque des revendications précédentes, lequel produit alimentaire comprend 0,2 à 10 % en poids d'huile et/ou de matière grasse.

5. Produit alimentaire selon la revendication 4, comprenant 0,5 à 2 % en poids d'huile et/ou de graisse.

6. Produit alimentaire selon l'une quelconque des revendications précédentes, lequel produit alimentaire comprend 0,1 à 3 % en poids de protéine de lait.

7. Procédé pour la préparation d'un produit alimentaire fermenté selon la revendication 1, dans lequel un matériau de départ comprenant de la protéine de soja est fermenté avec une ou plusieurs bactéries lactiques, **caractérisé en ce que** 40 à 95 % en poids ou plus, par rapport à la quantité totale de protéine de soja, sont constitués de protéine de soja hydrolysée.

8. Procédé selon la revendication 7, **caractérisé en ce que** 50 à 95 % en poids ou plus, par rapport à la quantité totale de protéine de soja, sont constitués de protéine de soja hydrolysée.

9. Procédé selon la revendication 7 ou 8, dans lequel le mélange est préparé à partir d'isolat de protéine de soja hydrolysée et d'isolat de protéine de soja non hydrolysée.

10. Produit pouvant être obtenu par le procédé défini dans l'une quelconque des revendications 7 à 9.
